# EUROPEAN PATENT SPECIFICATION

(11) **EP 2 504 207 B1**
(45) Date of publication and mention of the grant of the patent: **02.09.2015**
(21) Application number: 10779327.5
(22) Date of filing: 10.11.2010
(51) Int. Cl.: B60T 8/1764, B60T 8/17, B60T 8/24, B60T 7/20, B60T 13/26, B60T 13/66, B60T 13/68

(54) **METHOD OF OPERATING A TRAILER BRAKING SYSTEM**
VERFAHREN FÜR DEN BETRIEB EINES ANHÄNGERBREMSSYSTEMS
PROCÉDÉ D'UTILISATION D'UN SYSTÈME DE FREINAGE DE REMORQUE

(30) Priority: 23.11.2009 GB 0920420
(43) Date of publication of application: 03.10.2012
(73) Proprietor: Haldex Brake Products Limited, Lindley, Warwickshire CV13 6DE (GB)
(72) Inventor: HARRISON, Dudley, John, Solihull West Midlands B90 4YP (GB)
(74) Representative: Lawson, Alison Christina
(86) International application number: PCT/GB2010/051868
(87) International publication number: WO 2011/061523

(56) References cited:
- EP-A1- 0 798 615
- EP-A2- 0 088 894
- EP-A2- 0 128 582
- EP-A2- 0 256 283
- WO-A1-03/066402
- FR-A1- 2 643 031
- US-A- 5 058 018
- US-A1- 2007 029 875

## Description

The present invention relates to a method of operating a trailer braking system, in particular for a heavy goods vehicle comprising a tractor, a semi-trailer and a dolly.

It is known for heavy goods vehicles in particular to comprise a tractor and semi-trailer. Normally, the semi-trailer is towed by a semi-trailer truck with a fifth wheel type coupling, but in some instances, the front coupling of the semi-trailer is mounted on a fifth wheel coupling on a dolly. The semi-trailer is effectively converted into a full trailer which can be towed by a truck with a conventional drawbar coupling.

Such heavy goods vehicles are also normally provided with an anti-lock braking system (ABS) and roll-over control. The aim of the ABS is to prevent the vehicle wheels from locking during braking when the frictional forces between the tyre and the road surface are not adequate to transmit the braking force from the tyre to the road. ABS uses an electronic braking control unit, which receives a wheel speed signal from one or more wheel speed sensors, and at least one modulator to reduce momentarily the braking pressure applied to one or more of the vehicle wheels if wheel lock is detected.

If a vehicle is travelling on a split friction surface, the friction between the road surface and the wheel may vary from wheel to wheel, and this will affect the tendency of each wheel to lock. For example, the wheels on one side of the vehicle may travel over a patch of ice, and in this case, the wheels on the ice will lock at lower braking pressures than the other wheels.

For trailers and semi-trailers, there are two types of ABS available - a category A system which meets the ECE Regulation 13 split friction deceleration requirements, and a category B system which does not meet these requirements. A category B system does not provide for independent control of the braking force applied to the wheels on each side of the vehicle, and is operated in "select low" mode. This means that as soon as one of the wheels locks, the braking force applied to all the vehicle wheels is reduced so as to release the locked wheel. The simplest category B system for a semi-trailer need include only two wheel speed sensors and one modulator. It will be appreciated, however, that where the vehicle is travelling on a split friction surface, a category B system reduces the braking force applied to the wheel or wheels on the low friction surface and the wheel or wheels on the high friction surface, even though there is no danger of the wheel on the high friction surface locking. This, albeit momentary, reduction in the braking force will, of course, decrease the rate of retardation of the vehicle, and therefore will adversely affect the stopping distance of the vehicle.

In a category A system, enough modulators are provided to allow for independent braking control of at least some of the wheels on each side of the vehicle. A category A system for a semi-trailer must, therefore, have at least two wheel speed sensors and two modulators, each modulator controlling the braking force applied to the wheels on one side of the semi-trailer. It is not necessary, however, for all the wheels on one side of the vehicle to be controllable independently of all the wheels on the other side of the vehicle. A category A system for a full trailer may, for example, have one modulator for the front right wheels, another modulator for the front left wheels, and a third modulator which controls the braking force applied to both wheels on a rear axle of the trailer.

A category A system is also generally operated in "select low mode", so that a braking control intervention is initiated as soon as wheel lock is first detected, but in this case, the braking control intervention is applied only to wheels on the same side of the vehicle as the locked wheel. This means that when the vehicle is travelling on a split friction surface and one of the wheels on the low friction surface locks, the braking force applied to at least some of the wheels on the low friction surface is momentarily reduced, whilst the braking force applied to some, if not all, of the wheels on the other side of the vehicle is unaffected. This means that maximum use is made of the friction available for decelerating the vehicle, and the ABS braking control intervention does not have such a significant effect on the stopping distance of the vehicle. The braking force differential between the wheels on each side of the vehicle resulting from the ABS braking control intervention does, however, affect the steering of the vehicle in that it produces a torque which tends to steer the vehicle around the unaffected wheels (the wheels on the high friction surface in the split friction case). This is referred to as brake torque steer, and category A ABS can, therefore be detrimental to the directional stability of the vehicle.

Roll-over control typically works by measuring or calculating lateral acceleration of the vehicle, and when this reaches a threshold value, introducing a low-level test braking pulse to the wheel or wheels on the inside of the turn. If the test braking pulse causes one or more of these wheels to lock, this indicates that there is loss of adhesion between the tyre and the road due to load transfer to the wheels on the outside of the turn caused by lateral roll, and therefore that a roll-over control intervention is required to reduce the risk of vehicle roll-over. The roll-over control intervention typically comprises the application of a high-level braking force to the wheels on the outside of the turn, which acts to slow the vehicle, and introduces a brake torque steer which acts in opposition to the lateral acceleration of the vehicle.

In a heavy goods vehicle including a dolly and semi-trailer it is known to provide the semi-trailer with category A ABS and roll-over control, whilst the dolly only has category B ABS and does not have roll-over control.

EP0128582 discloses a trailer braking system including yaw-torque control which acts to control the brakes on the side of the vehicle which has high frictional engagement with the road, independently of the braking on the side of the vehicle with low frictional engagement with the road. In order to distinguish between yaw-torque arising resulting from braking whilst travelling on a curve from that arising from braking on a road surface with asymmetrical friction characteristics, the trailer is provided with an accelerometer which measures the transverse acceleration of the trailer. The system uses this to determine if the trailer is travelling on a curve, and if it is, inhibits the automatic limitation of brake pressure by a yaw-torque control system.

According to a first aspect of the invention we provide a method of operating a braking system for a trailer having at least one axle on which are mounted two ground-engaging wheels, one of which is provided on a first side of the trailer whilst the other is provided on a second side of the trailer, each wheel having a brake which is operable independently of the other by means of a brake actuator assembly, the method including controlling the difference between the brake pressure applied by the brake to the wheel on the first side of the trailer and the brake pressure applied by the brake to the wheel on the second side of the trailer so that it does not exceed a predetermined maximum pressure differential.

By providing for independent control of a brake on each side of a trailer vehicle such as a dolly, whilst limiting the differential between the braking pressure applied by the brakes of either side of the trailer vehicle, the effects of brake torque steer on the directional stability of the trailer may be minimised whilst providing for roll-over stability control and the ability to take some advantage of the available friction during emergency braking on a split friction surface.

Preferably the method includes setting the maximum pressure differential at a level dependent on the speed of the vehicle. In this case, the maximum pressure differential preferable increases as the speed of the vehicle decreases.

Further preferably the method includes the steps of determining whether the vehicle is turning and whether there is a risk of vehicle roll-over, and, if there is a risk of vehicle roll-over, initiating a roll-over stability control braking intervention which comprises the application of at least the brake associated with the wheel on the outside of the turn. In this case, the method preferably also comprises setting the maximum pressure differential at a roll-over control pressure differential level during a roll-over stability control braking intervention. The roll-over control pressure differential may be dependent on the speed of the vehicle.

Advantageously, the roll-over stability control braking intervention comprises the application of the brakes associated with the wheels on the first and second sides of the trailer.

The pressure applied by a brake during a roll-over stability control intervention and in the absence of driver demand for braking may be limited so it cannot exceed a predetermined absolute maximum pressure.

Further preferably the method also includes the steps of monitoring the speed of each of the wheels, determining if there is wheel slip, and, if there is wheel slip, initiating an anti-lock braking control intervention. In this case, the method preferably also comprises setting the maximum pressure differential at an anti-lock control pressure differential during an anti-lock braking control intervention, and may also include changing the anti-lock control pressure differential during the course of an anti-lock braking control intervention. The anti-lock pressure differential may also be dependent on the speed of the vehicle.

Preferably the anti-lock braking control intervention includes at least one anti-lock braking cycle, an anti-lock braking cycle comprising a rapid reduction in brake pressure applied the brake to its associated wheel followed by return of the brake pressure to a level at or close to the brake pressure prior to the rapid reduction. In this case, the method may include setting the anti-lock control pressure differential at a first level during the first anti-lock cycle of an anti-lcok braking control intervention, and increasing the pressure differential to a second level, which is higher than the first level, for a subsequent anti-lock cycle and all anti-lock cycles following the subsequent anti-lock cycle. The first level may be zero, i.e. there is no difference permitted between the braking pressure applied to each of the brakes during at least the first anti-lock cycle in any anti-lock control intervention.

The roll-over control pressure differential may be different to the anti-lock control pressure differential.

The method of determining if there is a risk of trailer roll-over may comprise automatically (i.e. without the need for driver braking demand) applying a low level test braking force to wheels on both sides of the trailer. The trailer may comprise a dolly which has two or more axles on each of which is supported at least two ground engaging wheels, a tractor connector by means of which the dolly may be towed by a towing vehicle, and a trailer connector by means of which the dolly may tow a semi-trailer.

According to a second aspect of the invention we provide a trailer having at least two ground-engaging wheels, one of which is provided on a first side of the trailer whilst the other is provided on a second side of the trailer, each wheel having a brake which is operable independently of the other by means of a brake actuator assembly, the trailer being further provided with an electrical braking controller which controls operation of the brake actuator assemblies in accordance with the method of the first aspect of the invention.

Preferably the trailer is a dolly which has two axles, on each of which are mounted two ground-engaging wheels, the axles being arranged such that the entire weight of the trailer can be supported exclusively by the ground-engaging wheels, the trailer also having a tractor connector by means of which the trailer may be towed by a towing vehicle, and a trailer connector by means of which the trailer may tow a semi-trailer.

An embodiment of the invention will now be described, by way of example only, with reference to the following figures:
FIGURE 1 shows a schematic illustration of a side view of a heavy goods vehicle fitted with a braking control system operable using the method according to the first aspect of the invention,
FIGURE 2 shows a schematic illustration of a plan view of the heavy goods vehicle shown in Figure 1,
FIGURE 3 shows a schematic illustration of the braking control system of the vehicle shown in Figures 1 and 2,
FIGURE 4 shows a schematic illustration of the operation of a braking system using an embodiment of the method according to the first aspect of the invention,
FIGURE 5 shows a graph of braking demand pressure against time during a roll-over control intervention for a braking control system operated using an embodiment of the method according to the first aspect of the invention, and
FIGURE 6 shows a graph of vehicle speed, anti-lock cycles, and braking demand pressures against time during an anti-lock braking control intervention for a braking control system operated using an embodiment of the method according to the first aspect of the invention.

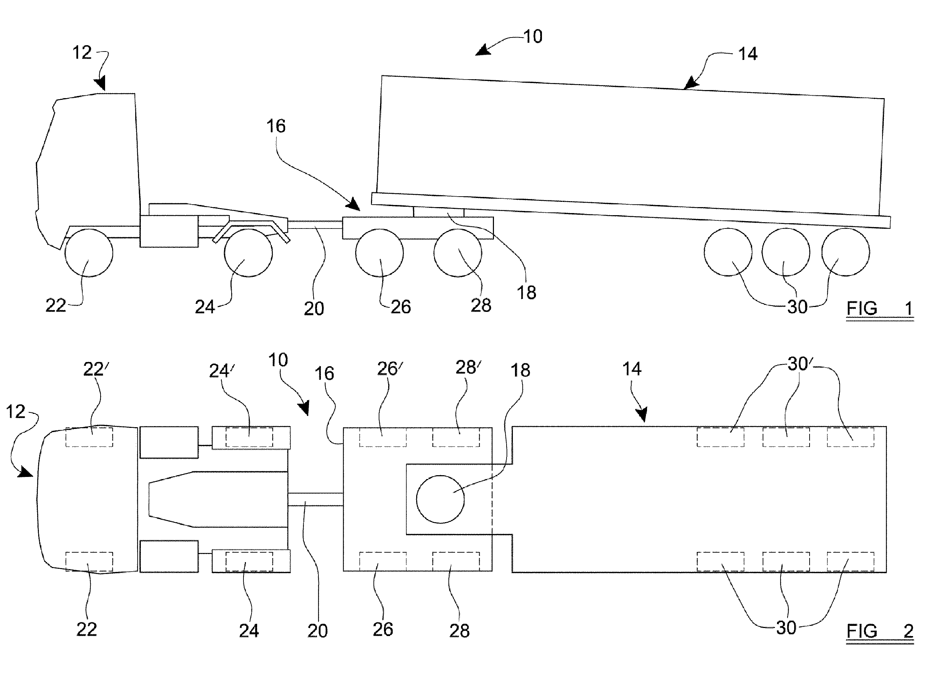

Referring first to Figures 1 and 2, there is provided a vehicle 10, in this example a heavy goods vehicle comprising a truck 12 and a semi-trailer 14 which are connected together via a dolly 16. The semi-trailer 14 is mounted on a fifth wheel coupling 18 provided on the dolly 16, and the dolly 16 is mounted on a hitch coupling 20 at the rear of the truck 12.

The truck 12 has front axle (not shown) on which are mounted two front wheels 22, 22', and a rear axle (not shown) on which are mounted two rear wheels 24, 24', one of the front and rear wheels 22, 24 being mounted on the left-hand side of the vehicle 10, and the others 22', 24' being mounted on the right-hand side of the vehicle 10. The dolly 16 also has a front axle (not shown) on which are mounted two front wheels 26, 26', and a rear axle (not shown) on which are mounted two rear wheels 28, 28', one of the front and rear wheels 26, 28 being mounted on the left-hand side of the vehicle 10, and the others 26', 28' being mounted on the right-hand side of the vehicle 10. The semi-trailer 14 has six wheels 30, 30' mounted towards the rear of the semi-trailer 14, three of which 30 are provided on the left-hand side of the vehicle 10, and three of which 30' are provided on the right-hand side of the vehicle 10.

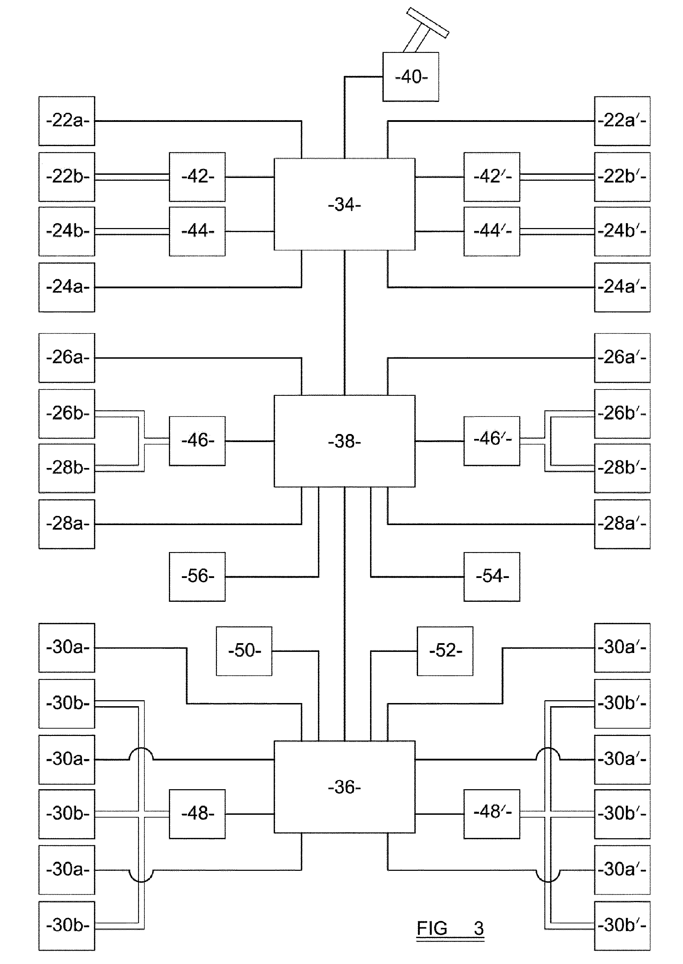

The vehicle 10 is provided with an electronic braking system (EBS), key elements of which are schematically illustrated in Figure 3. Each of the three parts of the vehicle 10, namely the truck 12, semi-trailer 14 and dolly 16, is provided with a braking electronic control unit (ECU) 34, 36, 38 respectively, and each wheel 22, 22', 24, 24', 26, 26', 28, 28', 30, 30' has an associated wheel speed sensor 22a, 22a', 24a, 24a', 26a, 26a', 28a, 28a', 30a, 30a'. Each wheel speed sensor 22a, 22a', 24a, 24a', 26a, 26a', 28a, 28a', 30a, 30a' is connected to the ECU 34, 36, 38 of the part of the vehicle 10 on which the sensor is mounted, and provides the ECU 34, 36, 38 with an input signal representative of the speed of the associated wheel 22a, 22a', 24a, 24a', 26a, 26a', 28a, 28a', 30a, 30a'.

Each wheel 22a, 22a', 24a, 24a', 26a, 26a', 28a, 28a', 30a, 30a' is provided with a brake (not shown) which is operated using a standard fluid pressure operated brake actuator 22b, 22b', 24b, 24b', 26b, 26b', 28b, 28b', 30b, 30b'.

The braking system also includes a plurality of modulators each of which is electrically operable to control the flow of pressurised fluid (typically compressed air) from a pressurised fluid reservoir to one or more of the fluid pressure operated brake actuators 22b, 22b', 24b, 24b', 26b, 26b', 28b, 28b', 30b, 30b'.

In this embodiment of the invention, the truck 12 is provided with four modulators 42, 42', 44, 44', each of which is electrically connected to the truck ECU 34, and has a pressurised fluid delivery outlet which is connected to an input port of one of the brake actuators 22, 22b', 24b, 24b' respectively. Thus, independent control of the operation of each of the four brake actuators 22b, 22b', 24b, 24b' on the truck is possible. It should be appreciated, however, that fewer than four truck modulators may be provided. For example, two modulators could be provided - each one controlling the flow of pressurised fluid to the two brake actuators associated with the wheels on one axle of the vehicle (hereinafter referred to as "axle-wise control"). Alternatively, three modulators may be used - one controlling the flow of pressurised fluid to the two brake actuators associated with the wheels on one axle of the truck (preferably the front axle), and the other two each controlling the flow of pressurised fluid to one of the brake actuators associated with the wheels on the other axle.

In this embodiment of the invention, the semi-trailer 14 is provided with two modulators 48, 48', each of which is electrically connected to the trailer ECU 36, and has a pressurised fluid delivery outlet which is connected to an input port of each of the brake actuators 30b or 30b' on one side of the vehicle 10. Thus, independent control of the operation of the brakes on either side of the vehicle 10 is possible (hereinafter referred to as "side-wise control"), but independent control of the operation of individual brakes is not permitted. It should be appreciated, however, that more than two modulators may be provided on the semi-trailer to provide for any combination of side-wise and axle-wise control, as long as there is side-wise control for at least one axle if it is required that the semi-trailer braking system qualifies as a Category A system.

The dolly 16 is also provided with two modulators 46, 46', each of which is electrically connected to the dolly ECU 38, and has a pressurised fluid delivery outlet which is connected to an input port of each of the brake actuators 26b, 28b or 26b,' 28b' on one side of the vehicle 10. Thus, independent control of the operation of the brakes on either side of the vehicle 10 is possible, but independent control of the operation of individual brakes is not permitted. It should be appreciated, however that more than two modulators may be provided. For example, three modulators may be used - one controlling the flow of pressurised fluid to the two brake actuators associated with the wheels on one axle of the dolly, and the other two each controlling the flow of pressurised fluid to one of the brake actuators associated with the wheels on the other axle. Alternatively, four modulators may be provided - one for each wheel 26, 26', 28, 28' of the dolly 16.

A brake pedal 40, which is operable by a driver of the vehicle to indicate the degree of vehicle braking required by the driver, is provided on the truck 12. The brake pedal 40 is connected to the truck ECU 34, and when operated, transmits to the ECU 34 an electrical signal indicative of the degree of braking required by the driver (the driver demand signal). The truck ECU 34 is connected to the dolly ECU 38 and the dolly ECU 38 is connected to the semi-trailer ECU 36 by standard CAN bus connectors, and the ECUs 34, 36, 38 programmed such that any driver demand signal generated by operation of the brake pedal 40 is transmitted from the truck ECU 34 to the dolly ECU 38 and the semi-trailer ECU 36.

Each modulator 42, 42', 44, 44', 46, 46', 48, 48' is connected to the ECU 34, 36, 38 on the part of the vehicle 10 on which the modulator is mounted, and, when a driver demand signal is received, each ECU 34, 36, 38 is programmed to generate and transmit to each modulator 42, 42', 44, 44', 46, 46', 48, 48' an electrical modified demand signal. The modified demand signal operates the modulator 42, 42', 44, 44', 46, 46', 48, 48' to allow flow of pressurised fluid to its associated brake actuator or actuators 22b, 22b', 24b, 24b', 26b, 26b', 28b, 28b', 30b, 30b' so that the brake actuators 22b, 22b', 24b, 24b', 26b, 26b', 28b, 28b', 30b, 30b' operate the associated brake and the desired braking force is applied to the vehicle 10. In this example, the semi-trailer 14 and the dolly 16 are each provided with a load sensor 52, 54 which is electrically connected to the respective ECU 36, 38 and which provides a signal indicative of the load borne by the axles of these parts of the vehicle 10. The loading of the vehicle 10, can therefore be taken into account by the ECU 34, 36 when producing the braking control signal, so that, for example, a greater braking force is applied if the vehicle is heavily loaded than when the vehicle is not carrying a significant load.

In this embodiment of the invention, the brake actuators 22b, 22b', 24b, 24b', 26b, 26b', 28b, 28b', 30b, 30b' are operated pneumatically, the electronic braking control signal generated by the central ECU being converted by the modulator 42, 42', 44, 44', 46, 46', 48, 48' to a pneumatic braking control signal which is then transmitted to one or more of the brake actuators 22b, 22b', 24b, 24b', 26b, 26b', 28b, 28b', 30b, 30b'. The invention may, of course, be applied to a braking system in which the brake actuators are hydraulically or electrically operated.

Each ECU 34, 36, 38 also provides anti-lock braking control, and therefore processes the wheel speed signals from the associated wheel speed sensors 22a, 22a', 24a, 24a', 26a, 26a', 28a, 28a', 30a, 30a' and is programmed to detect when any of the wheels locks, and to modify the braking control signal accordingly. The truck and semi-trailer ECUs 34, 36 both use standard ABS control algorithms to determine what modification to the braking control signal is required and when, and both operate in "select low" mode. The invention relates to the ABS control of the dolly 18, which will be discussed in more detail below.

The braking system also provides for roll-over stability control of the vehicle 10. To achieve this, the vehicle 10 is also equipped with an accelerometer 50 which is configured to measure the lateral acceleration of the vehicle 10. In this example, a standard roll-over stability control system is provided on the semi-trailer 14, and the accelerometer 50 is connected to the semi-trailer ECU 36 and provides the ECU 36 with an input signal representative of the lateral acceleration of the vehicle 10 so that the ECU 36 can detect when and which way the vehicle 10 is turning. The ECU 36 is programmed such that when the lateral acceleration of the vehicle 10 exceeds a predetermined value, it uses the lateral acceleration input to determine which way the vehicle is turning. If the vehicle is, for example, turning to the right as shown in Figures 2 and 3, the ECU 36 then sends a braking demand signal to the modulator 48' providing a pneumatic braking signal to the brake actuators 30b' associated with the wheels 30' on the inside of the turn, so as to apply a low level test braking pulse to each of the inside wheels 30', and uses the wheel speed sensors 30a' to monitor the speed of each of the inside wheels 30'.

The magnitude of the test braking force applied to each of the inside wheels 30' is such that with full or substantially full adhesion between the inside wheels 30' and the road, the test braking force would have little impact on wheel speed. If, however, adhesion between any of the inside wheels 30' and the road is reduced because the inside wheels 30' are tending to lift off the road, the test braking force is sufficiently high to cause the wheels 30' in question to stop or slow down until there is a high level of slip between the road and the wheels 30'. If the ECU 36 determines that the test braking pulse has induced slip in the inside wheels 30', wheel lift is deduced to be present, and the ECU 36 initiates a roll-over stability control intervention.

In this embodiment of the invention, if wheel lift is detected, the ECU 36 is programmed to initiate a stability control braking intervention, and send a braking demand signal to the modulator 48 providing a pneumatic braking signal to the brake actuators 30b associated with the outside, non-lifting wheels 30 so as to slow the vehicle down, and hence reduce the likelihood of rollover. This stability control intervention thus comprises the automatic actuation of the vehicle brakes without the need for any driver intervention or driver initiated braking demand. It will be appreciated, however, that the control intervention could comprise other means of reducing the vehicle speed, such as throttling the vehicle engine. Alternatively, if wheel lift is detected, the ECU 36 may be programmed to generate a rollover alarm signal, which may comprises an audible or visual alarm or both, to alert the driver that braking is required to reduce the vehicle speed, and hence avoid rollover.

It should be appreciated that the exact nature of the roll-over stability control system used on the semi-trailer 14 is not important, and any known method of roll-over instability detection, and type of roll-over stability control intervention may be used. Similarly, whilst, in this example, the truck 12 is not provided with roll-over stability control, this need not be the case, and a standard truck stability control system may be employed, in addition to or instead of the semi-trailer system.

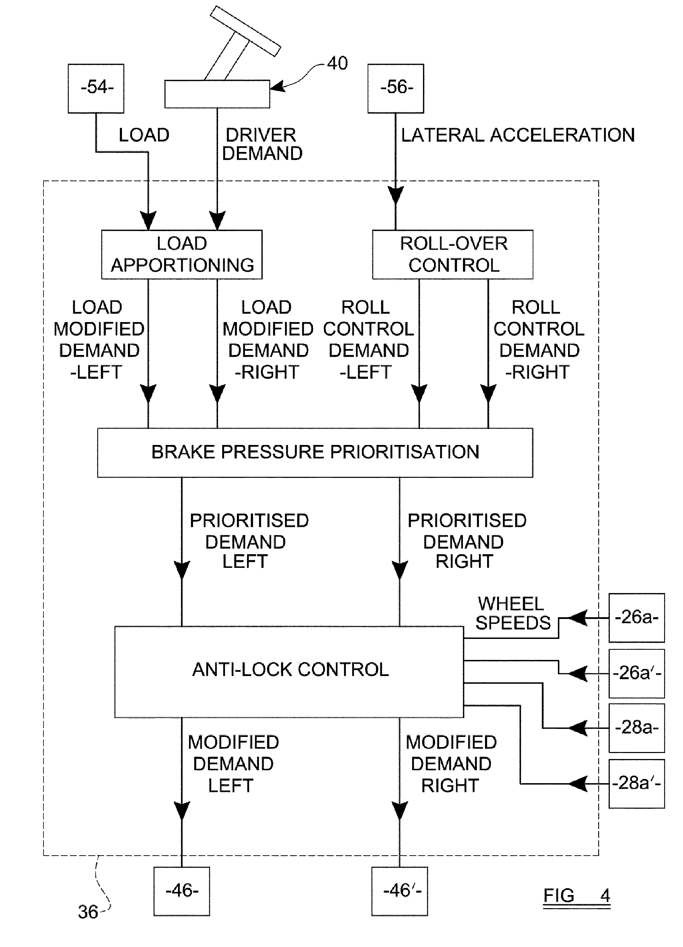

In this invention, the dolly 16 is also provided with roll-over stability control, and, in this example, also has an accelerometer 56 which is connected to the dolly ECU 38 and which provides the ECU 38 with an input signal representative of the lateral acceleration of the vehicle 10. The operation of the braking system (including the ABS and roll-over stability control) of the dolly is as follows, and as illustrated schematically in Figure 4.

When the dolly ECU 38 receives a braking demand signal, it uses the input of the load sensor 54 to produce a load modified braking demand for the wheels 26, 28 on the left of the vehicle 10, and a load modified braking demand for the wheels 26', 28' on the right of the vehicle 10 in accordance with standard EBS control algorithms. In the absence of roll-over or ABS control intervention, the ECU 36 uses the load modified braking demand to generate a left modified demand signal for the brakes on the left of the vehicle which is transmitted to the modulator 48, and right modified demand signal for the brakes on the right of the vehicle 10 which, is transmitted to the modulator 48'. The modulators 48, 48' then operate to send a pneumatic braking control signal to the brake actuators 30b, 30b' and the air pressure builds up in the brake actuators 30b, 30b', the braking pressure applied to the wheels 30, 30' by the brakes increases generally linearly until it reaches the level demanded.

The ECU 36 is also programmed to use the input from the accelerometer 56 to monitor the lateral acceleration of the dolly 16, and if this exceeds a predetermined threshold, it generates a roll control demand signal for both left and right modulators 46, 46'. If there is no driver demand, these roll control demand signals are transmitted to the modulators 46, 46' to cause a low level test braking pressure to be applied to the wheels 26, 26', 28, 28' on both sides of the dolly 16. The application of the test braking pressure to the wheels 26, 28, 26', 28' on both sides of the dolly 16 (as opposed to only the inside wheels as in existing systems) is advantageous because the test braking pulse will have negligible effect on the steering of the vehicle 10. Moreover, if there is a risk of roll-over, retardation of the vehicle 10 is required, and this starts sooner if there is already a braking force being applied to the outside wheels 26, 28 at the start of the roll-over control intervention.

If, for example, the accelerometer 56 indicates that the vehicle 10 is turning to the right, the adhesion between the road and the right-hand wheels 26', 28' of the dolly 16 is limited, and the application of the test braking pulse may cause these wheels to slip. If wheel slip is detected, a roll-over stability control intervention is initiated to decelerate the vehicle 10 and therefore reduce the risk of vehicle roll-over. It should be appreciated that the invention resides in what occurs during the roll-over stability control intervention, and is therefore not restricted to the use of this particular method of roll-over risk detection. The roll-over stability control intervention comprises the ECU 36 producing right and left roll control demand signals, which, in the absence of any driver braking demand or requirement for anti-lock braking intervention, become the right and left modified demand signals which are transmitted to and operate the modulators 46', and 46 respectively, to apply the vehicle brakes.

In a normal roll-over system, the control intervention would simply comprise generating a roll control demand signal which alters the modified demand signal sent to the left-hand modulator 46 to increase the braking pressure applied to the left-hand wheels 26, 28, i.e. the wheels on the outside of the turn with good adhesion to the road. In this system, however, the ECU is programmed such that the differential between the braking pressure applied to both sides of the dolly 16 cannot exceed a pre-determined maximum, so as to minimise brake torque steer effects and therefore maintain the directional stability of the vehicle 10. As such, in most instances the braking pressure needed to decelerate the vehicle 10 at a sufficient rate to avoid roll-over is sufficiently large, that a braking pressure must also be applied to the right-hand wheels 26', 28', i.e. the wheels on the inside of the turn, so that the pressure differential does not exceed this maximum. The roll-over stability control intervention therefore comprises generating left and right roll control demand signals, which alter the modified demand signals transmitted to the right-hand modulator 46' to apply a braking pressure to the right-hand wheels 26', 28', and to the left-hand modulator 46 to increase the braking pressure applied to the left-hand wheels 26, 28. The right roll control demand signal must, however, be as low as possible, and certainly lower than the left roll control demand signal, in view of the relatively limited adhesion between the right-hand wheels 26', 28' and the road. As such, at the start of the control intervention, the right and left roll control demand signals are set such that the pressure differential is at its maximum permitted level.

The ECU 36 may be programmed to vary the maximum pressure differential permitted during a roll-over stability control intervention according to the vehicle speed, for example, at the start of the roll-over stability control intervention.

As the vehicle slows down, the adhesion between the inside wheels 26', 28' and the road increases, and therefore the braking pressure applied to these wheels can be increased without causing wheel lock. The ECU 26 is therefore programmed to modify the right and left roll control demand signals to steadily increase the braking pressure applied to both sides of the dolly 16 whilst maintaining the pressure differential at its maximum level.

In this embodiment of the invention, the ECU 36 is also programmed to set an absolute limit to the roll control demand pressure. This can be advantageous as it may prevent over-braking with respect to an un-braked attached semi-trailer.

As the roll-over control intervention progresses, if the higher of the left or right roll control demand pressure (in this example, the left roll control demand) reaches the absolute limit, it is maintained at this level whilst the other roll control demand pressure continues to increase. As a result, the pressure differential decreases until, eventually, both left and right roll control demand pressures reach the absolute limit.

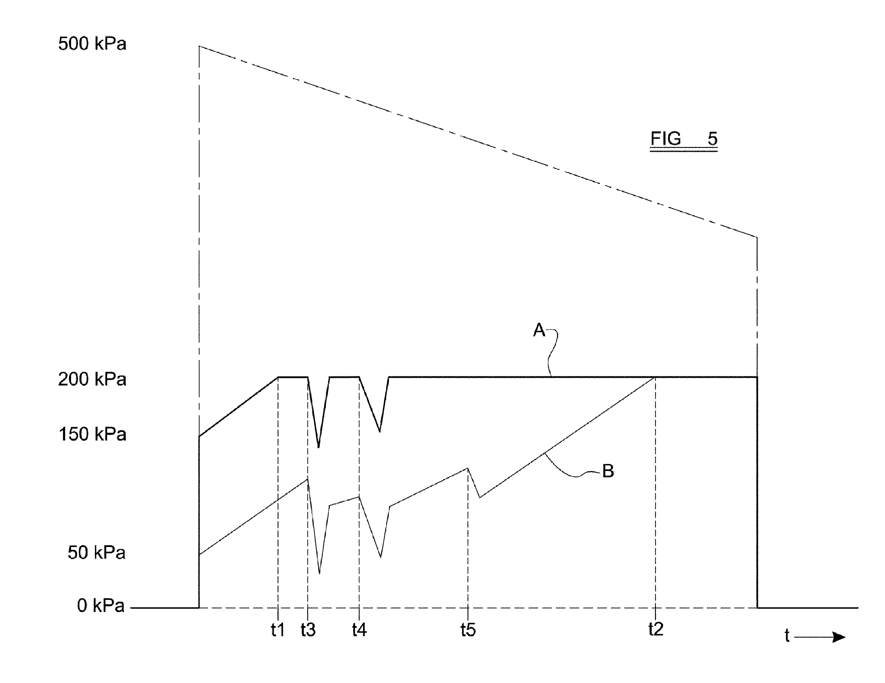

An example of this is illustrated in Figure 5, in which line A shows the left modified demand, whilst line B shows the right modified demand, whilst the vehicle 10 is turning right. The maximum demand pressure differential is set at 100 kPa, and at the start of the roll control intervention, the left modified demand is 150 kPa and the right roll control demand is 50 kPa. The left and right roll control demands increase linearly over time until at time t1 the left roll control demand reaches the absolute limit of 200 kPa, and is maintained at this level. The right roll control demand pressure continues to increase until, at time t2, it too reaches the absolute limit.

If there is driver braking demand at the same time as a roll-over control intervention, the ECU 36 compares the right load modified demand with the right roll control modified demand, and whichever is the highest becomes the right prioritised demand and is used as the right modified demand transmitted to the right modulator 46'. Similarly, the ECU 36 compares the left load modified demand with the left roll control demand, and whichever is highest becomes the left prioritised demand and is used as the left modified demand transmitted to the left modulator 46.

The ECU 36 is also programmed continuously to monitor the wheel speed signals received from the left and right wheel speed sensors 26a, 26a', 28a, 28b' and to use standard ABS algorithms to determine if wheel slip is occurring. Say, for example, the wheels 26', 28' on the right-hand side of the dolly pass over a low friction surface and one or both slips, as soon as the ECU 36 determines that there is wheel slip, the ECU 36 initiates an ABS control intervention which briefly reduces the braking force applied to all the wheels 26, 26', 28, 28' on the dolly 16, as in standard ABS control operated in "select low" mode.

The anti-lock control intervention comprises at least one anti-lock cycle in which the ECU 36 superimposes a sudden reduction in pressure on left and right prioritised demand signals to generate the left and right modified demand signals before allowing the demands to increase once more to around the same level as before the reduction. In the first anti-lock cycle, the ECU 36 processes the prioritised demand signals such that the left and right modified demand signals transmitted to the modulators 46, 46' become very similar and therefore the braking pressure differential between the left wheels 26, 28 and right wheels 26' 28' is zero or minimal. During subsequent anti-lock cycles, the differential between the left modified demand and the right modified demand is allowed to increase, so that the braking pressure applied to the wheels 26, 28 on the left-hand side of the dolly 16 (i.e. the wheels on the high friction surface) is increased compared to the braking pressure applied to the wheels 26', 28' on the right-hand side of the dolly 16 (i.e. the wheels on the low friction surface). Thus, the braking pressure applied to the left-hand wheels 26, 28 is brought closer to the braking pressure demanded by the driver, compared to the braking pressure applied to the right-hand wheels 26', 28', until the braking pressure differential between the left-hand wheels 26, 28 and the right-hand wheels 26', 28' reaches a pre-determined maximum value, in this example 200 kPa, at low vehicle speeds. This means that brake torque steers effects are reduced to a manageable level whilst reasonable use is made of the available friction to decelerate the dolly 16. In other words, in this system, a compromise is made between directional stability (brake torque steer is permitted but only to a limited, manageable extent) and deceleration of the dolly 16, with priority being given to directional stability at the start of the braking, i.e. when the speed of the vehicle 10 is high.

The maximum pressure differential may be maintained at the zero or minimal level for only the first anti-lock cycle in each anti-lock control intervention, or for the first few (two or three) anti-lock cycles in each anti-lock control intervention, before being increased as the vehicle slows down.

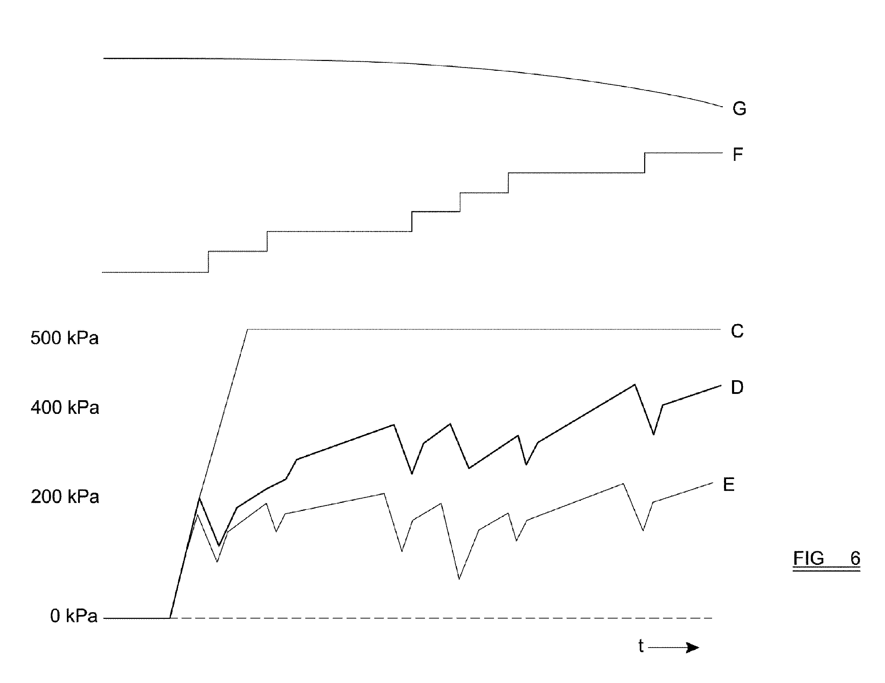

An anti-lock braking control intervention when there is no roll-over risk is illustrated in Figure 6, in which line C represents the load modified braking demand, line D represents the left modified demand signal transmitted to the left-hand modulator 46, line E represents the right modified demand signal transmitted to the right-hand modulator 46', line F represents the number of anti-lock cycles, and line G represents the vehicle speed.

Figure 5 illustrates an anti-lock control intervention taking place during roll-over control intervention. Anti-lock control intervention is initiated at time t3 due to slip of one of the right-hand (low adhesion) wheels 26', 28', and therefore there is a momentary reduction in both the left and right modified demands. This is repeated in a second anti-lock cycle at time t4. By time t5, the left modified demand can be maintained at the absolute limited of 200 kPa during an anti-lock cycle as the reduction in right modified demand comprising the anti-lock cycle does not cause the pressure differential to exceed the maximum pressure differential of 100 kPa.

The ECU 36 is preferably programmed set a roll status flag to indicate that a roll-over control intervention is taking place, and to set the maximum permitted pressure differential between the right and left modified demands during an anti-lock control intervention to a different value depending on whether or not roll-over control is also required. For example, if there is no roll-over control intervention a maximum differential of 200 kPa may be permitted, but if the roll status flag is active, indicating that a roll-over control intervention is taking place, the maximum pressure differential may be reduced to 100 kPa.

Whilst the dolly 16 described above has two axles, it should be appreciated that the invention could equally be applied to a dolly with a single axle or more than two axles. Moreover, whilst the invention is described as being applied to a dolly 16, it may equally be applied to the braking of the front axle or axles of a full-trailer. The invention can also be applied to a road train consisting of more than one dolly and semi-trailer combination or a mixture of full trailers and dolly / semi-trailer combinations, with the invention being applied to some or all of the dollies or full trailers in the road train.

When used in this specification and claims, the terms "comprises" and "comprising" and variations thereof mean that the specified features, steps or integers are included. The terms are not to be interpreted to exclude the presence of other features, steps or components.

## Claims

1. A method of operating a braking system for the trailer of a vehicle (10) comprising a towing vehicle (12) and a trailer (16), the trailer (16) having at least two ground-engaging wheels (26, 26', 28, 28'), one (26, 28) of which is provided on a first side of the trailer (16) whilst the other (26', 28') is provided on a second side of the trailer (16), each wheel (26, 26', 28, 28') having a brake which is operable independently of the other by means of a brake actuator assembly (46, 26b, 28b, 46', 26', 28'), the method including controlling the difference between the brake pressure applied by the brake to the wheel (26, 28) on the first side of the trailer (16) and the brake pressure applied by the brake to the wheel (26', 28') on the second side of the trailer so that it does not exceed a predetermined maximum pressure differential.

2. A method according to claim 1 wherein the method includes setting the maximum pressure differential at a level dependent on the speed of the vehicle (16), and the maximum pressure differential increases as the speed of the vehicle (10) decreases.

3. A method according to any preceding claim wherein the method includes the steps of determining whether the trailer (16) is turning and whether there is a risk of trailer roll-over, and, if there is a risk of trailer roll-over, initiating a roll-over stability control braking intervention which comprises the application of at least the brake associated with the wheel (26, 26', 28, 28') on the outside of the turn.

4. A method according to claim 3 wherein the method also comprises setting the maximum pressure differential at a roll-over control pressure differential during a roll-over stability control braking intervention.

5. A method according to claim 4 wherein the roll-over control pressure differential is dependent on the speed of the vehicle (10).

6. A method according to claim 3 wherein the pressure applied by a brake during a roll-over stability control intervention and in the absence of driver demand for braking is limited so it cannot exceed a predetermined absolute maximum pressure.

7. A method according to any preceding claim wherein the method also includes the steps of monitoring the speed of each of the wheels (26, 26', 28, 28'), determining if there is wheel slip, and, if there is wheel slip, initiating an anti-lock braking control intervention.

8. A method according to claim 7 wherein the method also comprises setting the maximum pressure differential at an anti-lock control pressure differential during an anti-lock braking control intervention.

9. A method according to claim 8 wherein the method also comprises changing the anti-lock control pressure differential during the course of an anti-lock braking control intervention.

10. A method according to claim 8 wherein the anti-lock pressure differential is dependent on the speed of the vehicle (10).

11. A method according to claim 8 wherein the anti-lock braking control intervention includes at least one anti-lock braking cycle, an anti-lock braking cycle comprising a rapid reduction in brake pressure applied the brake to its associated wheel followed by return of the brake pressure to a level at or close to the brake pressure prior to the rapid reduction.

12. A method according to claim 11 wherein the method includes setting the anti-lock control pressure differential at a first level during the first anti-lock cycle of an anti-lock braking control intervention, and increasing the pressure differential to a second level, which is higher than the first level, for a subsequent anti-lock cycle and all anti-lock cycles following the subsequent anti-lock cycle.

13. A method according to claims 4 and 8 wherein the roll-over control pressure differential is different to the anti-lock control pressure differential.

14. A method according to any preceding claim wherein the trailer (16) comprises a dolly which has two or more axles on each of which are mounted two ground engaging wheels (26, 26', 28, 28'), a tractor connector (20) by means of which the dolly (16) may be towed by a towing vehicle (12), and a trailer connector (18) by means of which a semi-trailer (14) may be towed by the dolly (16).

15. A trailer (16) having at least two ground-engaging wheels (26, 26', 28, 28'), one of which is provided on a first side of the trailer (16) whilst the other (26', 28', 26, 28) is provided on a second side of the trailer (16), each wheel (26, 26', 28, 28') having a brake which is operable independently of the other by means of a brake actuator assembly (46, 26b, 28b, 46', 26b', 28'b), the trailer (16) being further provided with an electrical braking controller (38) which controls operation of the brake actuator assemblies (46, 26b, 28b, 46', 26b', 28'b) in accordance with the method of any preceding claim.

16. A trailer (16) according to claim 15 wherein the trailer (16) is a dolly which has two or more axles on each of which are mounted two ground engaging wheels (26, 28, 26', 28'), and the axles are arranged such that the entire weight of the trailer (16) can be supported exclusively by the ground-engaging wheels (26, 28, 26', 28'), the trailer (16) also having a tractor connector (20) by means of which the dolly (16) may be towed by a towing vehicle (12), and a trailer connector (18) by means of which a semi-trailer (14) may be towed by the dolly (16).

## Patentansprüche

1. Verfahren für den Betrieb eines Bremssystems für den Anhänger eines Fahrzeugs (10), umfassend ein Zugfahrzeug (12) und einen Anhänger (16), wobei der Anhänger (16) zumindest zwei in den Boden eingreifende Räder (26, 26', 28, 28') aufweist, von denen eines (26, 28) auf einer ersten Seite des Anhängers (16) bereitgestellt ist, während das andere (26', 28') auf einer zweiten Seite des Anhängers (16) bereitgestellt ist, wobei jedes Rad (26, 26', 28, 28') eine Bremse aufweist, die von der anderen unabhängig mittels einer Bremsaktorbaugruppe (46, 26b, 28b, 46', 26', 28') betätigbar ist, wobei das Verfahren das Kontrollieren des Unterschieds zwischen dem von der Bremse auf das Rad (26, 28) auf der ersten Seite des Anhängers (16) ausgeübten Bremsdruck und dem von der Bremse auf das Rad (26', 28') auf der zweiten Seite des Anhängers ausgeübten Bremsdruck, sodass er ein vorbestimmtes maximales Druckdifferenzial nicht überschreitet, beinhaltet.

2. Verfahren nach Anspruch 1, worin das Verfahren das Einstellen des maximalen Druckdifferenzials auf ein von der Geschwindigkeit des Fahrzeugs (16) abhängiges Niveau beinhaltet und das maximale Druckdifferenzial zunimmt, während die Geschwindigkeit des Fahrzeugs (10) abnimmt.

3. Verfahren nach irgendeinem vorhergehenden Anspruch, worin das Verfahren die Schritte des Bestimmens dessen, ob der Anhänger (16) sich dreht und ob die Gefahr eines Überrollens des Anhängers besteht und, wenn die Gefahr eines Überrollens des Anhängers besteht, des Einleitens eines die Überrollstabilität kontrollierenden Bremseingriffs, der die Betätigung zumindest der mit dem Rad (26, 26', 28, 28') assoziierten Bremse auf der Außenseite der Drehbewegung umfasst, beinhaltet.

4. Verfahren nach Anspruch 3, worin das Verfahren außerdem das Einstellen des maximalen Druckdifferenzials auf ein Überrollkontroll-Druckdifferenzial während eines die Überrollstabilität kontrollierenden Bremseingriffs umfasst.

5. Verfahren nach Anspruch 4, worin das Überrollkontroll-Druckdifferenzial von der Geschwindigkeit des Fahrzeugs (10) abhängig ist.

6. Verfahren nach Anspruch 3, worin der von einer Bremse während eines die Überrollstabilität kontrollierenden Eingriffs und in der Abwesenheit eines Fahrerbremsbedarfs ausgeübte Druck beschränkt ist, damit er einen vorbestimmten absoluten Höchstdruck nicht überschreiten kann.

7. Verfahren nach irgendeinem vorhergehenden Anspruch, worin das Verfahren außerdem die Schritte der Überwachung der Geschwindigkeit jedes der Räder (26, 26', 28, 28'), des Bestimmens dessen, ob Radschlupf vorliegt und, bei vorliegendem Radschlupf, des Einleitens eines Antiblockier-Bremskontrolleingriffs beinhaltet.

8. Verfahren nach Anspruch 7, worin das Verfahren außerdem das Einstellen des maximalen Druckdifferenzials auf ein Antiblockierkontroll-Druckdifferenzial während eines Antiblockier-Bremskontrolleingriffs umfasst.

9. Verfahren nach Anspruch 8, worin das Verfahren außerdem das Ändern des Antiblockierkontroll-Druckdifferenzials im Verlauf eines Antiblockier-Bremskontrolleingriffs umfasst.

10. Verfahren nach Anspruch 8, worin das Antiblockier-Druckdifferenzial von der Geschwindigkeit des Fahrzeugs (10) abhängig ist.

11. Verfahren nach Anspruch 8, worin der Antiblockier-Bremskontrolleingriff zumindest einen Antiblockier-Bremszyklus, einen Antiblockier-Bremszyklus umfassend eine rasche Verringerung des von der Bremse auf ihr assoziiertes Rad ausgeübten Bremsdrucks gefolgt von der Rückkehr des Bremsdrucks auf ein Niveau auf oder nahe dem Bremsdruck vor der raschen Verringerung beinhaltet.

12. Verfahren nach Anspruch 11, worin das Verfahren das Einstellen des Antiblockierkontroll-Druckdifferenzials auf ein erstes Niveau während des ersten Antiblockierzyklus eines Antiblockier-Bremskontrolleingriffs und das Erhöhen des Druckdifferenzials auf ein zweites Niveau, das höher als das erste Niveau ist, für einen folgenden Antiblockierzyklus und alle Antiblockierzyklen nach dem folgenden Antiblockierzyklus beinhaltet.

13. Verfahren nach Anspruch 4 und 8, worin sich das Überrollkontroll-Druckdifferenzial vom Antiblockierkontroll-Druckdifferenzial unterscheidet.

14. Verfahren nach irgendeinem vorhergehenden Anspruch, worin der Anhänger (16) einen Dolly, der zwei oder mehr Achsen aufweist, wobei an jeder davon zwei in den Boden eingreifende Räder (26, 26', 28, 28') montiert sind, einen Zugfahrzeugverbinder (20), mittels dessen der Dolly (16) von einem Zugfahrzeug (12) gezogen werden kann, und einen Anhängerverbinder (18), mittels dessen ein Aufleger (14) vom Dolly (16) gezogen werden kann, umfasst.

15. Anhänger (16) aufweisend zumindest zwei in den Boden eingreifende Räder (26, 26', 28, 28'), von denen eines auf einer ersten Seite des Anhängers (16) bereitgestellt ist, während das andere (26', 28', 26, 28) auf einer zweiten Seite des Anhängers (16) bereitgestellt ist, wobei jedes Rad (26, 26', 28, 28') eine Bremse aufweist, die von der anderen unabhängig mittels einer Bremsaktorbaugruppe (46, 26b, 28b, 46', 26b', 28'b) betätigbar ist, wobei der Anhänger (16) ferner mit einem elektrischen Bremsregler (38) versehen ist, der den Betrieb der Bremsaktorbaugruppen (46, 26b, 28b, 46', 26b', 28'b) im Einklang mit dem Verfahren nach irgendeinem vorhergehenden Anspruch steuert.

16. Anhänger (16) nach Anspruch 15, worin der Anhänger (16) ein Dolly ist, der zwei oder mehr Achsen aufweist, wobei an jeder davon zwei in den Boden eingreifende Räder (26, 28, 26', 28') montiert und die Achsen derart angeordnet sind, dass das gesamte Gewicht des Anhängers (16) ausschließlich von den in den Boden eingreifenden Rädern (26, 28, 26', 28') getragen werden kann, wobei der Anhänger (16) außerdem einen Zugfahrzeugverbinder (20), mittels dessen der Dolly (16) von einem Zugfahrzeug (12) gezogen werden kann, und einen Anhängerverbinder (18), mittels dessen ein Aufleger (14) vom Dolly (16) gezogen werden kann, aufweist.

## Revendications

1. Procédé d'utilisation d'un système de freinage pour la remorque d'un véhicule (10) comprenant un véhicule tracteur (12) et une remorque (16), la remorque (16) ayant au moins deux roues de contact avec le sol (26, 26', 28, 28'), une (26, 28) d'elles étant située sur un premier côté de la remorque (16) tandis que l'autre (26', 28') est située sur un second côté de la remorque (16), chaque roue (26, 26', 28, 28') ayant un frein utilisable indépendamment de l'autre au moyen d'un ensemble actionneur de frein (46, 26b, 28b, 46', 26', 28'), le procédé consistant à réguler la différence entre la pression de freinage appliquée par le frein à la roue (26, 28) sur le premier côté de la remorque (16) et la pression de freinage appliquée par le frein à la roue (26', 28') sur le second côté de la remorque, de sorte qu'elle ne dépasse pas une différence de pression maximale prédéterminée.

2. Procédé selon la revendication 1, le procédé incluant le réglage de la différence de pression maximale à un niveau dépendant de la vitesse du véhicule (16), la différence de pression maximale augmentant quand la vitesse du véhicule (10) diminue.

3. Procédé selon l'une quelconque des revendications précédentes, le procédé comprenant les étapes consistant à déterminer si la remorque (16) est en train de virer et s'il existe un risque de renversement de la remorque, et, s'il existe effectivement un risque de renversement de la remorque, amorcer une intervention de freinage de contrôle de stabilité de renversement comprenant le serrage, au moins, du frein associé à la roue (26, 26', 28, 28') sur l'extérieur du virage.

4. Procédé selon la revendication 3, le procédé incluant également le réglage de la différence de pression maximale à une différence de pression de contrôle de renversement pendant une intervention de freinage de contrôle de stabilité de renversement.

5. Procédé selon la revendication 4, dans lequel la différence de pression de contrôle de renversement dépend de la vitesse du véhicule (10).

6. Procédé selon la revendication 3, dans lequel la pression appliquée par un frein pendant une intervention de contrôle de stabilité de renversement et en l'absence d'une demande de freinage par le conducteur, est limitée de manière à ne pas pouvoir dépasser une pression maximale absolue prédéterminée.

7. Procédé selon l'une quelconque des revendications précédentes, le procédé comprenant également les étapes consistant à surveiller la vitesse de chacune des roues (26, 26', 28, 28'), déterminer s'il existe un patinage des roues, et, s'il existe effectivement un patinage des roues, amorcer une intervention de contrôle de freinage antiblocage.

8. Procédé selon la revendication 7, le procédé incluant également le réglage de la différence de pression maximale à une différence de pression de contrôle antiblocage pendant une intervention de contrôle de freinage antiblocage.

9. Procédé selon la revendication 8, le procédé incluant également la variation de la différence de pression de contrôle antiblocage au cours d'une intervention de contrôle de freinage antiblocage.

10. Procédé selon la revendication 8, dans lequel la différence de pression antiblocage dépend de la vitesse du véhicule (10).

11. Procédé selon la revendication 8, dans lequel l'intervention de contrôle de freinage antiblocage comprend au moins un cycle de freinage antiblocage, un cycle de freinage antiblocage consistant en une réduction rapide de la pression de freinage appliquée par le frein à sa roue associée, puis en un retour de la pression de freinage au niveau ou à proximité de la pression de freinage antérieure à la réduction rapide.

12. Procédé selon la revendication 11, le procédé incluant le réglage de la différence de pression de contrôle antiblocage à un premier niveau pendant le premier cycle antiblocage d'une intervention de contrôle de freinage antiblocage, et l'augmentation de la différence de pression à un second niveau, supérieur au premier niveau, pendant un cycle antiblocage ultérieur et tous les cycles antiblocages qui suivent le cycle antiblocage ultérieur.

13. Procédé selon les revendications 4 et 8, dans lequel la différence de pression de contrôle de renversement est différente de la différence de pression de contrôle antiblocage.

14. Procédé selon l'une quelconque des revendications précédentes, dans lequel la remorque (16) comprend un diabolo muni d'au moins deux essieux sur chacun desquels sont montées deux roues de contact avec le sol (26, 26', 28, 28'), une prise de tracteur (20) au moyen de laquelle le diabolo (16) peut être tracté par un véhicule tracteur (12), et une prise de remorque (18) au moyen de laquelle une semi-remorque (14) peut être tractée par le diabolo (16).

15. Remorque (16) ayant au moins deux roues de contact avec le sol (26, 26', 28, 28'), une d'elles étant située sur un premier côté de la remorque (16) tandis que l'autre (26', 28', 26, 28) est située sur un second côté de la remorque (16), chaque roue (26, 26', 28, 28') ayant un frein utilisable indépendamment de l'autre au moyen d'un ensemble actionneur de frein (46, 26b, 28b, 46', 26b', 28'b), la remorque (16) étant en outre munie d'un contrôleur de freinage électrique (38) qui contrôle le fonctionnement des ensembles actionneurs de frein (46, 26b, 28b, 46', 26b', 28'b) selon le procédé selon l'une quelconque des revendications précédentes.

16. Remorque (16) selon la revendication 15, la remorque (16) étant un diabolo comprenant au moins deux essieux sur chacun desquels sont montées deux roues de contact avec le sol (26, 28, 26', 28'), et les essieux sont disposés de telle sorte que le poids entier de la remorque (16) puisse être supporté exclusivement par les roues de contact avec le sol (26, 28, 26', 28'), la remorque (16) étant également munie d'une prise de tracteur (20) au moyen de laquelle le diabolo (16) peut être tracté par un véhicule tracteur (12), et une prise de remorque (18) au moyen de laquelle une semi-remorque (14) peut être tractée par le diabolo (16).
